# EUROPEAN PATENT SPECIFICATION

(11) **EP 2 224 022 B1**
(45) Date of publication and mention of the grant of the patent: **29.01.2014**
(21) Application number: 09180136.5
(22) Date of filing: 29.08.2000
(51) Int. Cl.: C22B 3/18, C22B 15/00

(54) **Improved bacterial oxidation of sulphide ores and concentrates**
Verbesserte bakterielle Oxidation von sulfidischen Erzen und Konzentraten
Oxydation bacterienne amelioree de minerais sulfures et de concentres

(30) Priority: 03.09.1999 AU PQ265199
(43) Date of publication of application: 01.09.2010
(62) Divisional of application: 00955956.8
(73) Proprietor: Bioheap Limited, Northbridge, WA 6003 (AU)
(72) Inventor: Hunter, Colin John, Dalkeith, Western Australia 6009 (AU); Williams, Tamsin Lisa, Maylands, Western Australia 6051 (AU); Cheung, Leo Wai-Chiu, Lincoln New Brunswick E3B 7J1 (CA); Connors, Elena, Fredericton New Brunswick E3A 5G8 (CA); Gilders, Ross David, New Maryland New Brunswick E3C 1C6 (CA); Purkiss, Simon Anthony Roger, South Ascot, SL5 9BD (GB)
(74) Representative: Radkov, Stoyan Atanassov

(56) References cited:
- AU-A- 7 856 098
- US-A- 4 888 293
- DOPSON M. AND LINDSTRÖM E.B.: "Potential Role of Thiobacillus caldus in Arsenopyrite Bioleaching" APPLIED AND ENVIRONMENTAL MICROBIOLOGY, vol. 65, no. 1, January 1999 (1999-01), pages 36-40, XP002338740 usa

## Description

The present invention relates to the improved bacterial oxidation of sulphide ores and concentrates using a mixed bacterial culture.

The bacterial oxidation process of the present invention has particular application in the bacterial oxidation of ores and concentrates containing chalcopyrite.

### BACKGROUND ART

Bacterial oxidation has been used for a number of years in successfully processing arsenopyrite, pyrite, pyrrhotite, covellite and chalcocite ores and concentrates, the one exception to this processing has been the oxidation of chalcopyrite (CuFeS₂) ores and concentrates.

Prior art mixes of bacteria used to facilitate oxidation of sulphide ores and concentrates, other than chalcopyrite ores and concentrates, use a variety of suites of bacteria. For example, the mixed bacterial culture employed by Gencor Limited of South Africa comprise predominantly *Thiobacillus ferrooxidans, Thiobacillus thiooxidans* and *Leptospirillum ferrooxidans.* The Gencor cultures consist of a mixed population of mesophilic bacteria, which operate in the temperature range of 35°C to 45°C (Dew & Miller, 1997).

Further, Finnish Patent Application 953488 to Gencor Limited discloses the use of *Thiobacillus ferrooxidans, Thiobacillus thiooxidans* and *Leptospirillum ferrooxidans* to achieve oxidation at a pH of preferably 3 with an ore preferably crushed to below 6mm.

The bacterial culture utilised by BacTech (Australia) Pty Ltd, see for example US Patent 5429659, is a moderately thermophilic bacterial culture operating in the temperature range of 46°C to 50°C. The culture has been designated "M4" by Barrett et al (1988) and has been described by Nobar et al (1988) (Brierley and Brans 1994).

The MINBAC process developed by Mintek - Anglo American Corporation based in Randburg, South Africa utilises a mesophilic mixed bacterial culture comprising *Thiobacillus ferrooxidanslLeptospirillum ferrooxidans* (Brierley and Brans 1994).

US 4,888,293 discloses bacterial cultures of *Thiobacillus thiooxidans, Thiobacillus ferrooxidans* and *Leptospirillum ferrooxidans* used to oxidize multimetallic sulfides.

The bacterial cultures presently used are unable to produce commercially acceptable results for chalcopyrite without either ultra fine milling (p80<20µm) of the ore or concentrate to facilitate bacterial oxidation, or the use of very long leach times to achieve oxidation. Times of over 100 days are not uncommon.

Current trends are moving towards the use of higher temperatures to encourage ferric oxidation. However, the high temperatures employed lead to having to cool post-oxidation and to provide reactors formed of specialised materials, for example surgical grade stainless steel. Both circumstances increase the cost of such an operation.

The process of the present invention has as one object thereof to overcome the abovementioned problems associated with the prior art, or to at least provide a useful alternative thereto.

The preceding discussion of the background art is intended to facilitate an understanding of the present invention only. It should be appreciated that the discussion is not an acknowledgement or admission that any of the material referred to was part of the common general knowledge in Australia as at the priority date of the application.

Throughout this specification, unless the context requires otherwise, the word "comprise", or variations such as "comprises" or "comprising", will be understood to imply the inclusion of a stated integer or group of integers but not the exclusion of any other integer or group of integers.

Throughout the specification, an ore is considered material that has been removed from the ground and does not receive any treatment to increase the metal concentration. A concentrate is produced by passing an ore through a treatment process, generally gravity or flotation, in order to increase the concentration of desired metals and decrease the volume of material which is subsequently treated to recover those desired metals.

### DISCLOSURE OF THE INVENTION

In accordance with the present invention there is provided a process for the bacterial oxidation of sulphide ores and concentrates **characterised in that** the ore or concentrate is leached with a mixed bacterial culture at a temperature of between 45 to 65°C, and at a pH of between about 0.8 to 2.2, according to claim 1.

Preferably, the ore or concentrate is leached with the mixed bacterial culture in a heap leach, tank leach, vat leach or dump leach.

Still preferably, the ore or concentrate is either of a base metal, a precious metal or platinum group ore or concentrate. The sulphide ore or concentrate preferably contains chalcopyrite.

The ore or concentrate may preferably be leached at a grind or crush size of up to and greater than P₈₀ 90 µm. Still preferably, the grind or crush size is between about P₈₀ 75 µm and P₈₀ 90 µm.

The mixed bacterial culture comprises *Sulfobacillus thermosulfidooxidans, Thiobacillus caldus,* and *Thiobacillus ferrooxidans.* The mixed bacterial culture is first adapted to the particular ore or concentrate. The process of adaption preferably comprises the addition of both a sample of the ore or concentrate and the mixed bacterial culture to a leach vessel, and leaching the resulting slurry until the level of targeted metal reporting to solution either reaches 100% or reaches a plateau.

The adaption slurry is preferably pH adjusted to a pH of between about 1.6 and 1.8.

### BRIEF DESCIPTION OF THE DRAWINGS

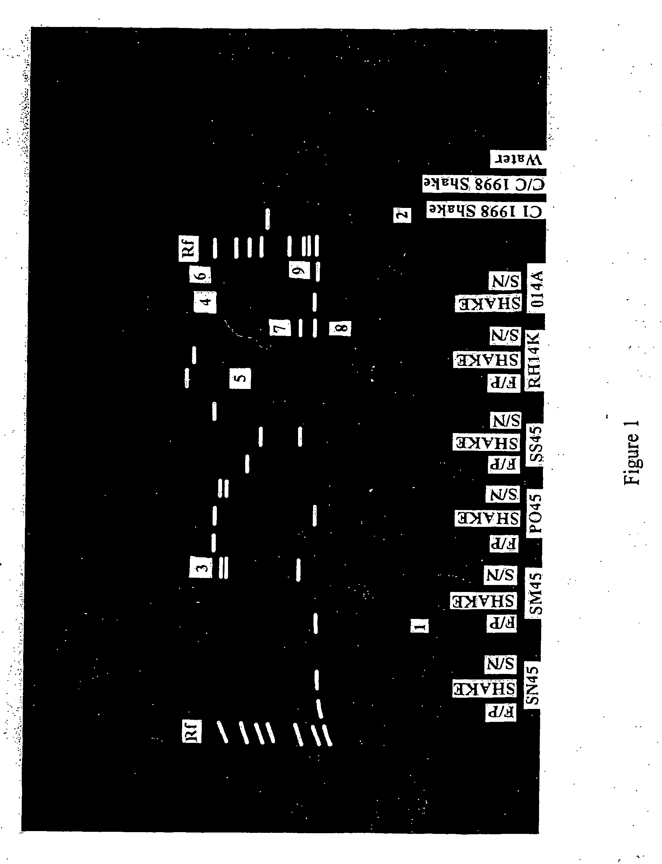

The present invention will now be described, by way of example only, with reference to the accompanying Figure, in which:-
Figure 1 is a photographic representation of the denaturing gradient gel results for six samples of the mixed bacterial culture of the present invention, processed by three different methods.

### DESCRIPTION

In order to raise a culture capable of processing chalcopyrite ores and concentrates a bacterial culture indigenous to a chalcopyrite mineral was sought. Indigenous bacterial cultures are typically superior to modified isolated cultures as the indigenous culture has already been adapted to the toxins and mineral components associated with a particular ore resulting in more effective and resilient bacterial strains.

Bacterial cultures indigenous to chalcopyrite ores were cultivated and tested for their ability to oxidise both their native ore/concentrate and other chalcopyrite ores and concentrates. During this program of work a culture was raised from a chalcopyrite (CuFeS₂) concentrate obtained from a base metal ore found in New Brunswick, Canada. Following the isolation of the bacterial culture, testing of the culture has taken place on both its' native ore and concentrate, and on a variety of other ores and concentrates. Additions to the original culture have taken place as, during testing of the culture of different materials, any native bacteria capable of operating under the parameters of the test and being able to operate competitively with the introduced culture have not only survived but have thrived in the environment. In this way any bacteria native to the ore or concentrate being tested have been incorporated into the culture. In addition, the culture has been grown successfully at different temperatures ranging from 40°C to 65°C and at varying levels of acidity with pH levels ranging from 0.8-2.2. Successful testing of the culture has taken place in both aerated agitated stirred tank reactors and in aerated columns to facilitate column leaching. Successful testing of the culture took place at a variety of temperatures and on a variety of ores and concentrates.

The mixed bacterial culture of the present invention consists of a variety of iron, sulphide and sulphur oxidising bacteria capable of working at temperatures of up to 65°C and at pH ranges of between 0.8 and 2.5. The mixed bacterial culture may include, but is not limited to, *Sulfobacillus thermosulfidooxidans, Thiobacillus caldus, Thiobacillus ferrooxidans* and a number of as yet unidentified bacterial species. The mixed bacterial culture of the present invention has been deposited at the Australian Government Analytical Laboratories under Accession No. NM99/07541.

### Example

Prior to testing any material the stock bacterial culture is first adapted to the material of interest. This is facilitated by placing 2700 ml of modified 0K solution (1.0 g/L ammonium sulphate, 0.5 g/L di-potassium orthophosphate, 0.16 g/L magnesium sulphate heptohydrate, pH 1.6 - 1.8) into an agitated aerated stirred tank reactor heated to the required temperature. To the modified 0K medium a 150g sample of milled (P₈₀<45 µm) test material is added and the pH adjusted down to between 1.6 and 1.8 if necessary using concentrated sulphuric acid. To this slurry a 300 ml slurry sample of the stock inoculum is introduced. The agitated reactor is aerated at a rate of 1 L/min/L slurry. The adaption is continued until the level of relevant metals reporting to solution reaches either 100% or reaches a plateau. Solution samples are assayed for metal levels in solution through the use of an ICP, where appropriate the pH of the slurry is adjusted with concentrated sulphuric acid so that the pH is between 1.6 and 1.8. In addition to metal levels reporting to solution the progress of the adaption/test is further monitored according to its oxidation reduction potential (ORP), ferrous concentration and dissolved oxygen concentration (DO).

Once the culture has adapted to the material of interest it is used as an inoculum for further agitated aerated stirred tank reactor tests or as an inoculum for heap or column tests. The adapted bacterial inoculum is diluted further through the addition of an acidic basic nutrient solution containing ammonium sulphate, potassium orthophosphate and magnesium sulphate. The concentration of these nutrients in solution may vary between laboratory tests and commercial operation and between different commercial operations. In all cases the progress of oxidation is monitored through the levels of metals reporting to solution, pH, ORP, ferrous concentration and DO content.

The mixed bacterial culture of the present invention was tested on a range of chalcopyrite bearing samples from various locations around the world. Table 1 below illustrates the mineralogy and origin of the chalcopyrite concentrates and ores tested using the bacterial culture of the present invention.

**TABLE 1**

| **Sample** | **Mineralogy** | **Origin** |
|---|---|---|
| A | Chalcopyrite copper concentrate. | USA |
| B | Molybdenum concentrate with low levels of copper in chalcopyrite. | Canada |
| C | Concentrate comprising predominantly chalcopyrite (35%) and cubanite (17%) with lesser quantities of pyrrhotite (10%) and minor amounts of pentlandite (3%) and sphalerite (3%). | Canada |
| D | Copper Nickel concentrate in which copper is present as both chalcopyrite (18.5 - 28.5%) and cubanite (15.8 - 30.8%). Nickel is present as pentlandite (17.7 - 10.4%) and occasionally replaced as violarite. | USA |
| E | Three copper concentrates consisting of chalcopyrite, pyrite and minor amounts of bornite. | Canada |
| F | Copper concentrate consisting of chalcocite (14%), chalcopyrite (10%), bornite (1%) and pyrite (1%). | South Africa |
| G | Samples i and iii are ore samples and sample ii is a concentrate sample. The sulphide minerals are predominantly pentlandite, chalcopyrite and pyrrhotite. | Western Australia |

### General test procedure

All tests on mineral samples were conducted in agitated aerated tank reactors. Each test had a solids density of 10%w/v and was aerated by sparging at a rate of 1 L air per minute per litre of slurry in the reactor. The evaporative losses due to the heating and aeration of the slurry were made up prior to sampling the tests. This was accomplished through the addition of tap water. All slurries were made up in a proprietary nutrient media with a starting pH of 1.0. Sampling involved assaying the solution for iron, copper and other relevant metal ions. In addition, the oxidation-reduction potential (ORP), pH, ferrous iron and dissolved oxygen levels were also monitored and recorded. Copper release was used to monitor the progress of the test and once this reached a stable plateau or attained approximately 100% of the copper reporting to solution the test was deemed complete. Once complete the pulps were pressure filtered, the final leach liquor assayed and the filter cake washed with acidified water and dried. The dried filter cake was weighed and the residue assayed in order to conduct a metallurgical balance.

The results from head analysis, particle size analysis and the results following oxidation are summarised and displayed in Table 2.

**TABLE 2**

| **Sample** | **Head Analysis** | | | | **T °C** | **Days Leached** | **Results after leaching** |
|---|---|---|---|---|---|---|---|
| | **Particle Size Analysis** | **Fe %** | **Cu%** | **S ^{total} %** | | | **% Cu Leached** |
| A | P₈₁<90µm | 28.60 | 29.40 | 32.1 | 48 | 36 | 96.6 |
| B | P₈₅<90µm | 2.85 | 1.95 | 37.6 | 48 | 20 | 96.9 |
| C | P₈₀<75µm | 27.30 | 20.97 | 27.37 | 48 | 22 | 98.0 |
| D | P₈₀<75µm | 26.30 | 12.80 | 25.1 | 48 | 27 | 95.0 |
| E i | P₈₄<75µm | 15.00 | 2.87 | 13.9 | 48 | 28 | 99.3 |
| E iii | P₇₈<75µm | 26.6 | 4.62 | 34.4 | 48 | 28 | 99.3 |
| F | P₈₀<43µm | 6.79 | 28.5 | 10.2 | 60 | 14 | 95.3 |
| G | P₈₀<75µm | 17.8 | 1.18 | 7.88 | 48 | 14 | 98.8 |
| G ii | P₈₀<75µm* | 45.1 | 6.82 | 34.8 | 50 | 10 | 98.0 |
| G iii | P₈₀<75µm | 18.2 | 0.1 | 3.11 | 50 | 8 | 97.3 |
| H | P₈₀<75µm* | 23.8 | 19.7 | 36.7 | 48 | 15 | 99.2 |

| | | | | | | | |
|---|---|---|---|---|---|---|---|
| *nominal sizing of the "as received" concentrate. | | | | | | | |

A number of samples of the adapted bacterial culture of the present invention have been grown at temperatures ranging from 35°C to 65°C, samples from each of the cultures have been removed and prepared for identification using 16SrRNA sequencing. Preparation of the samples prior to RNA sequencing was undertaken using three different methods. The methods used and the results obtained from 16rRNA sequencing are as follows.

### Methods

Six samples (designated SN 45, SN 45, PO 45, SS 45, RH 14K, and 014A) were tested.

The samples were mixed on a hand shaker at maximum speed for 30 minutes and processed as follows:
**A. Shaken.** 500 µl of the shaken sample was immediately sedimented onto glass fibre filters (#30 Sliecher and Schuell, Keene, NH) in a 1.5 ml microtube by centrifugation at 14Krpm for 4 minutes. The supernatant was carefully removed, and the sedimented material was washed twice in 1 ml of tissue culture grade water.
**B. Fast Prep.** 500 µl was immediately removed and homogenized using a Savant BIO 101 Fast Prep machine (BioCan Scientific) at speed 4 for 20 seconds. The homogenates were sedimented and washed as described above.
**C. Supernatant.** Following shaking, the samples were allowed to sit for 5 minutes to allow the particulate matter to settle to the bottom of the tubes. 500 µl of the supernatant was then sedimented and washed as previously described.

RNA was extracted from all samples using InstaGene Matrix (BioRad, Hercules, CA) as per manufacture's instructions. The RNA concentration was determined by uv spectrophotometry (A₂₆₀) and 50 ng were added to the PCR reaction mixture with a final concentration of 2mM magnesium ion, 100 uM dNTP, 0.32 µm each primer and 0.625 units of Taq Gold Polymerase. The universal primers p515f and p806r (Relman 1993) were used to amplify an approximately 300bp segment of the 16S ribosomal RNA gene. The forward primer was modified with a 40bP GC rich sequence that terminated the migration of the amplified product at various concentrations of urea/formamide within a denaturing gradient gel (Sheffield et al. 1989; Muyzer et at. 1993) Bands of interest were cut from the denaturing gels and purified amplified product was subjected to cycle sequencing using Big Dye Terminator extension from the reverse primer using the conditions recommended (PE Applied Biosystems). Sequence determination was performed on a 310 Genetic Analyser (PE Applied Biosystems). Sequence comparisons were conducted using the basic local alignment search tool (BLAST; Altschul et al. 1990).

### Results

Each of the three samples processing methods resulting in a different profile for the same sample, as shown in Figure 1. Nine predominant bands were selected for sequencing. The 300bp segments sequenced had the closest match with partial sequences of the 16S rRNA gene of the bacterial species listed in the BLAST result column. A larger 16S segment would have to be sequenced for more precise identification.

A summary of the BLAST search results for the 300 base pair 16S rRNA gene segments sequenced is shown in Table 3. The numbers in parentheses refer to the % homology between the unknowns and their closest matches.

**TABLE 3**

| **Band** | **sequenced from** | **band with same mobility** | **BLAST result** |
|---|---|---|---|
| 1 | SM45-fast prep | SN45-shaken, C1 (1998)-shaken C/C (1998)-shaken | *Sulfobacillus thermosulfidooxidans (98%)* |
| 2 | C1 (1998)-shaken | SM45-fast prep SN45-shaken C/C (1998)-shaken | *Sulfobacillus thermosulfidooxidans (98%)* |
| 3 | SN45-supernatant | 014A-shaken | *Streptococcus salvivaritus* (100%) |
| | | | *Streptococcus thermophilus (100%)* |
| 4 | 014A (50°C)-shaken | SN45-supernatant | *Streptococcus salvivaritus (100%)* |
| | | | *Streptococcus thermophilus (100%)* |
| 5 | RH 14K (60°C)-shaken | | *Caulobacter sp. (99%)* |
| | | | *Asticcacaulus exentricus (99%)* |
| | | | *Asticcacaulis biprothecum (99%)* |
| | | | *Psuedomonas echinoides (97%)* |
| | | | *Sphingomonas paucimobilus* (98%) |
| 6 | 014A (50°C)-shaken | | *Psuedomonas echinoides (98%)* |
| | | | *Sphingomonas trueperi (97%)* |
| | | | *Caulobacter sp. (97%)* |
| | | | *Asticcacaulis biprothecum (97%)* |
| 8 | RH14K (60°C)-supernatant | PO45-fastprep/shaken/ supernatant | *Unidentified bacterium (97%) Denitrifying Fe<II> oxidizing bacteria (97%)* |
| | | SS45-supernatant | |
| 9 | 014A (50°C)-supernatant | SN45-fastprep/shaken/ supernatant | *Thiobacillus ferrooxidans (96%)* |
| | | | |
| | | SM45-fastprep | |
| | | 014A shaken | |

It is envisaged that bacterial species can be omitted or substituted to the mixed culture outlined above in order to facilitate its operation at different temperatures. For example, *Thiobacillus thiooxidans* a sulphur oxidising bacteria may be substituted for *Thiobacillus caldus* at lower temperatures.

It is envisaged that the materials the mixed bacterial culture of the present invention may be used to treat include base metal ores and concentrates (copper, nickel, cobalt zinc etc), precious metal ores and concentrates (gold and silver) and platinum group metal (PGM) ores and concentrates. It is further envisaged that the culture may be used in a heap leach, tank leach, vat leach or dump leach oxidation.

Heap leaching is by far the most commonly utilised bacterial process for recovering copper from the more easily oxidised secondary copper minerals such as covellite and chalcocite. The process involves stacking crushed ore onto a specially prepared impermeable pad. The pad is designed so that the pregnant liquor draining from the heap collects at a point from which it is drained to a collection pond. Metals are recovered from the pregnant liquor solution either via precipitation, solvent extraction and/or electrowinning.

In order for successful heap leaching to take place it is essential to maintain the integrity of the heap. The main factor determining the heaps stability is the crush size of the ore. Crushing of the ore must take place to an extent where the ore is fine enough to allow good lixiviant percolation through the heap without excessive channelling taking place whilst also maintaining void spaces essential for good air dispersion and lixiviant drainage. If the ore is crushed too finely percolation through the heap may be very slow. Insufficient void spaces will be present and inefficient drainage of the heap will occur resulting in pooling in the heap and a high phreatic head. If on the other hand the ore size is too coarse, drainage of the heap will be fast and the level of metals in solution will be low, in addition the structure of the heap may fail as the ore is broken down through biological and chemical processes. In many cases the crushed ore is agglomerated with binders, sulphuric acid and water prior to stacking, the result being a more uniform particle size and acid distribution throughout the heap.

Prior to stacking the heap a drainage layer is usually placed on the pad, this is generally composed of unreactive rock such as quartzite and ensures adequate drainage of the pregnant liquor. Heaps are irrigated with acidified bacterial liquor which acts as the lixiviant for leaching of the copper from the ore. The bacteria employed in heap leaching are generally aerobic and therefore require oxygen. This may be forced into the heap by means of low pressure blowers or air may be sucked into the heap due to a chimney effect that occurs as bacteria oxidise ore and create heat.

The Geocoat process is a variation on heap leaching and has been marketed by US company Geobiotics. The process involves producing a concentrate from the sulphidic ore, coating this onto crushed, sized rock and producing a heap that can be subjected to bacterial oxidation.

Dump leaching is very similar to heap leaching and is generally reserved for lower grade ores. Often dump leaching will be considered an as accompanying process to heap leaching rather than a stand alone project in its own right. Essentially, where waste or low grade rock is to be mined and stockpiled anyway, with little ground preparation beforehand, some value can be extracted from the material. Indigenous bacteria will be present in the heap and all that is required is to promote their activity. This is done by the addition of acid and nutrients to the irrigation solution, such as with heap leaching. The difference is in the cost.

Little or no crushing will be performed prior to stacking. Only the bare minimum of pad preparation will be performed. There will be no forced aeration.

Vat leaching can be considered to be intermediate between heap leaching and tank leaching in terms of cost, sophistication and efficiency. It is a process in which the material to be treated is fully immersed in the leach solution but is not agitated, at least not to any significant extent, though some agitation due to the air and/or solution flow may take place. The process has the advantage over heap or dump leaching in that complete wetting of the mineral surfaces is achieved and channelling is avoided. Finer crush sizes can also be handled better in a vat, though there is still a limit to the fineness imposed by the need for permeability by both the air and solution. Beyond this limit, it becomes necessary to suspend the material in the solution. If the vats are to be single use only, they can be constructed as lined dams, sloped to one corner to allow circulation and recovery of the leach liquor. Multiple use vats would need to be of a more robust construction such as concrete or brick. Aeration would be by submerged pipe or could otherwise by accomplished by intermittently draining the vat and allowing air to be drawn into the ore by the retreating liquor.

Tank leaching, as the name suggests, entails the bacterial leaching of aerated mineral slurries in agitated tanks. The technology was pioneered by Gencor and is now well developed for the treatment of gold. It is envisaged that the technology would be very similar for base metal bio-leaching, but to date a system for copper has not been commercially developed.

Available results indicate that the costs associated with ultra-fine milling of the concentrate (P₈₀ <30 µm) can be expected to make the capital and operating costs too high.

The process of the present invention is capable of operating at a wide range of temperatures, thereby leading to a reduction in costs associated with cooling bacterial oxidation systems. The process is further capable of oxidising all forms of chalcopyrite, and at crush sizes that need not incur significant capital and operating costs.

Modifications and variations such as would be apparent to the skilled addressee are considered to fall within the scope of the present invention.

### REFERENCES

Altschul, S.F., W. Gish, W. Miller, E.W. Myers, and D.J. Lipman. 1990. Basic local alignment search tool. J. Mol. Bio. 215: 403-410.
Brierley C.L. and R Brans, 1994 - Selection of BacTech's Thermophilic Bio-Oxidation Process for Youanmi Mine, In Biomine 94, Conference Proceeding Perth Western Australia. Section 5.
Barrett, J., Hughes, M.N., Ewart, D.K. and Poole, R.K., 1988 - The isolation and characterisation of a moderately thermophilic mixed culture of autotrophic bacteria: application of the oxidation of refractory gold concentrates. Perth Gold 88, Randol International Ltd, Golden, Colorado, pp 148 150.
Dew, D.M. and D.M. Miler, 1997 - The BioNIC Process; Bioleaching of Mineral Sulphide Concentrates For Recovery of Nickel, In IBS Biomine '97, Conference Proceedings, Sydney, p M7.1.0 - M7.1.9.
Muyzer, G.E. C. DeWall, and A.G. Uitterlinden, 1993. Profiling of complex microbial populations by denaturing gradient gel electrophoresis analysis of polymerase chain reaction amlified genes coding for the 16s rRNA. Appl. Environ. Microbiol. 59: 695-700.
Nobar, A.M., Ewart, D.K., Alsaffar, L., Barrett, J., Hughes M.N. and Poole, R.K., 1988 - Isolation and characterisation of a mixed microbial community from an Australian mine: application to the leaching of gold from refractory ores, Biohydrometallurgy (P.R. Norris and D.P. Kelly, eds), Science and Technology Letters, Kew Surrey, UK, pp 530-531.
Relman, D.A. 1993. Universal bacterial 16s rRNA amplification and sequencing, p489-495. In D.H. Persing, T.F. Smith, F.C. Tenover, and J. White (eds) Diagnostic Molecular Biology Principles and Applications - 1993. American Society for Microbiology, Washington, DC.
Sheffield, V.C., D.R. Cox, L.S. Lerman, and R.M. Muyers. 1989. Attachment of a 40 base pair G+C rich sequence (GC-clamp) to genomic RNA fragments by polymerase chain reaction results in improved detection of single base changes. Proc.Natl.Acad.Sci USA 86:232-236.

## Claims

1. A process for the bacterial oxidation of sulphide ores and concentrates **characterised in that** the ore or concentrate is leached with a mixed bacterial culture operative across a temperature range of between 45 to 65 °C and at a pH of between 0.8 to 2.5, the bacterial culture having been adapted to the ore or concentrate prior to leaching, and wherein the mixed bacterial culture comprises *Sulfobacillus thermosulfidooxidans, Thiobacillus caldus,* and *Thiobacillus ferrooxidans.*

2. A process according to claim 1, **characterised in that** the pH is between 0.8 to 2.2.

3. A process according to claim 1 or claim 2, **characterised in that** the ore or concentrate is leached with the bacterial culture in a heap leach, tank leach, vat leach or dump leach.

4. A process according to any one of claims 1 to 3, **characterised in that** the ore or concentrate is either of a base metal, a precious metal or platinum group metal.

5. A process according to any one of claims 1 to 4, **characterised in that** the sulphide ore or concentrate contains chalcopyrite.

6. A process according to any one of the preceding claims, **characterised in that** the ore or concentrate is leached at a grind or crush size of greater than P₈₀ 75 µm.

7. A process according to claim 6, **characterised in that** the grind or crush size is greater than P₈₀ 90 µm.

8. A process according to any one of the preceding claims, **characterised in that** the process of adaptation comprises the addition of both a sample of the ore or concentrate and the mixed bacterial culture to a leach vessel, and leaching the resulting adaptation slurry until the level of targeted metal reporting to solution either reaches 100% or reaches a plateau.

## Patentansprüche

1. Verfahren zur bakteriellen Oxidation von Sulfiderzen und -konzentraten, **dadurch gekennzeichnet, dass** das Erz oder Konzentrat mit einer gemischten Bakterienkultur gelaugt wird, die über einen Temperaturbereich von 45 bis 65 °C und bei einem pH-Wert von 0,8 bis 2,5 wirkt, wobei die Bakterienkultur vor dem Laugen an das Erz oder Konzentrat gewöhnt wurde und wobei die gemischte Bakterienkultur Sulfobacillus thermosulfidooxidans, Thiobacillus caldus und Thiobacillus ferrooxidans umfasst.

2. Verfahren nach Anspruch 1, **dadurch gekennzeichnet, dass** der pH-Wert 0,8 bis 2,2 beträgt.

3. Verfahren nach Anspruch 1 oder Anspruch 2, **dadurch gekennzeichnet, dass** das Erz oder Konzentrat mit der Bakterienkultur in einer Haufenlaugung, einer Tanklaugung, einer Kessellaugung oder einer Haldenlaugung gelaugt wird.

4. Verfahren nach einem der Ansprüche 1 bis 3, **dadurch gekennzeichnet, dass** das Erz oder Konzentrat entweder das eines Nichtedelmetalls, eines Edelmetalls oder eines Metalls der Platingruppe ist.

5. Verfahren nach einem der Ansprüche 1 bis 4, **dadurch gekennzeichnet, dass** das Sulfiderz oder - konzentrat Chalkopyrit enthält.

6. Verfahren nach einem der vorhergehenden Ansprüche, **dadurch gekennzeichnet, dass** das Erz oder Konzentrat bei einer Mahl- oder Brechgröße von mehr als P₈₀ 75 µm gelaugt wird.

7. Verfahren nach Anspruch 6, **dadurch gekennzeichnet, dass** die Mahl- oder Brechgröße mehr als P₈₀ 90 µm beträgt.

8. Verfahren nach einem der vorhergehenden Ansprüche, **dadurch gekennzeichnet, dass** das Verfahren der Gewöhnung das Zugeben sowohl einer Probe des Erzes oder Konzentrats als auch der gemischten Bakterienkultur in einen Laugbehälter und das Laugen der entstehenden Gewöhnungsschlämme umfasst, bis der Gehalt des Zielmetalls in der Lösung entweder 100 % oder ein Plateau erreicht.

## Revendications

1. Procédé pour l'oxydation bactérienne de minerais et concentrés sulfurés **caractérisé en ce que** le minerai ou concentré est lixivié avec une culture bactérienne mixte active sur toute une plage de température comprise entre 45 et 65 °C et à un pH compris entre 0,8 et 2,5, la culture bactérienne ayant été adaptée au minerai ou concentré avant la lixiviation, et dans lequel la culture bactérienne mixte comprend *Sulfobacillus thermosulfidooxydans, Thiobacillus caldus* et *Thiobacillus ferrooxydans.*

2. Procédé selon la revendication 1, **caractérisé en ce que** le pH est compris entre 0,8 et 2,2.

3. Procédé selon la revendication 1 ou la revendication 2, **caractérisé en ce que** le minerai ou concentré est lixivié avec la culture bactérienne dans une lixiviation en tas, une lixiviation en cuve, une lixiviation par percolation ou une lixiviation de terril.

4. Procédé selon l'une quelconque des revendications 1 à 3, **caractérisé en ce que** le minerai ou concentré est un minerai ou concentré soit d'un métal commun, soit d'un métal précieux soit d'un métal du groupe du platine.

5. Procédé selon l'une quelconque des revendications 1 à 4, **caractérisé en ce que** le minerai ou concentré sulfuré contient de la chalcopyrite.

6. Procédé selon l'une quelconque des revendications précédentes, **caractérisé en ce que** le minerai ou concentré est lixivié à une taille de broyage ou de concassage supérieure à P₈₀ de 75 µm.

7. Procédé selon la revendication 6, **caractérisé en ce que** la taille de broyage ou de concassage est supérieure à P₈₀ de 90 µm.

8. Procédé selon l'une quelconque des revendications précédentes, **caractérisé en ce que** le procédé d'adaptation comprend l'ajout à la fois d'un échantillon du minerai ou concentré et de la culture bactérienne mixte à un récipient de lixiviation et la lixiviation de la pulpe d'adaptation résultante jusqu'à ce que le niveau de métal ciblé passant en solution soit atteigne 100 % soit atteigne un plateau.
